(19) Europäisches Patentamt / European Patent Office / Office européen des brevets

(11) **EP 4 763 640 A1**

(12) **DEMANDE DE BREVET EUROPEEN**

(43) Date de publication:
**24.06.2026 Bulletin 2026/26**

(21) Numéro de dépôt: **25223785.4**

(22) Date de dépôt: **16.12.2025**

(51) Classification Internationale des Brevets (IPC):
**B60W 30/045** (2012.01)    **B60W 50/00** (2006.01)

(52) Classification Coopérative des Brevets (CPC):
**B60W 30/045;** B60W 2050/0033; B60W 2720/14;
B60W 2720/20

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **19.12.2024 FR 2414763**

(71) Demandeur: AMPERE s.a.s.
**92100 Boulougne-Billancourt (FR)**

(72) Inventeurs:
• **GINOYA, Divyesh**
**75017 Paris (FR)**
• **GEOFFRIAULT, Maud**
**78280 Guyancourt (FR)**
• **SETIA, Shivam**
**411057 PUNE (IN)**

(74) Mandataire: **Renault Group**
**Renault s.a.s.**
**1 avenue du Golf**
**FR TCR AVA 055**
**78084 Guyancourt Cedex (FR)**

(54) **PROCÉDÉ DE CONTRÔLE DES ACTIONNEURS D'UN VÉHICULE AUTOMOBILE METTANT EN OEUVRE UN MODÈLE BICYCLETTE ÉVOLUÉ**

(57) L'invention concerne un procédé de contrôle d'actionneurs d'un véhicule automobile comprenant :
- une première étape (401) de détermination d'une vitesse de lacet de référence $\dot{\psi}_{ref}$ pour le véhicule automobile, en utilisant un modèle de référence prenant comme entrées un angle du volant du véhicule et une consigne de vitesse longitudinale du véhicule,
- une deuxième étape (402) de mise en œuvre des actionneurs du véhicule de manière à asservir la vitesse de lacet effective $\dot{\psi}$ du véhicule sur la vitesse de lacet de référence $\dot{\psi}_{ref}$,

le procédé étant caractérisé en ce que le modèle de référence utilisé est un modèle bicyclette modifié pour tenir compte :
- de variations de la vitesse longitudinale du véhicule automobile,
- de non linéarités de la zone de fonctionnement des pneumatiques du véhicule automobile.

L'invention concerne également un véhicule configuré pour mettre en œuvre le procédé.

Fig. 4

EP 4 763 640 A1

**Description**

**Domaine technique :**

L'invention se situe dans le domaine des véhicules automobiles, et porte plus particulièrement sur un procédé de contrôle des actionneurs d'un véhicule mettant en œuvre un modèle de référence de type bicyclette. L'invention porte également sur un véhicule mettant en œuvre le procédé pour le contrôle de ses actionneurs.

**Technique antérieure :**

Un actionneur est un dispositif pouvant être embarqué dans un véhicule automobile, et dont le rôle est de convertir un signal de consigne électrique en une action. Un véhicule automobile comprend entre autres des actionneurs de freinage, des actionneurs de couple moteur, des actionneurs de braquage des roues directrices, etc. L'invention porte sur le contrôle de tels actionneurs dans un véhicule.

De manière habituelle, les consignes de conduite délivrées par le conducteur et/ou par des calculateurs, par exemple des calculateurs d'aide à la conduite (en anglais ADAS pour *Advanced Driver Assistance System*) ou des calculateurs de conduite pour un véhicule autonome, sont converties en consignes pour les différents actionneurs du véhicule.

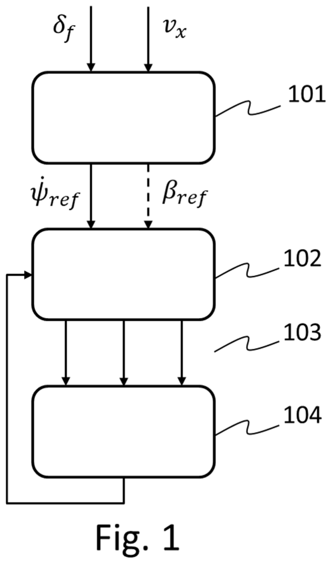

Le principe est résumé à la figure 1 pour le contrôle latéral d'un véhicule. Des consignes de conduite, en particulier une consigne $\delta_f$ d'angle de braquage des roues avant (que l'on peut obtenir par exemple à partir de l'angle du volant du véhicule) et une consigne $v_x$ de vitesse longitudinale du véhicule, éventuellement complétées par d'autres entrées comme par exemple une estimation du coefficient de friction $\mu$ de la route, sont fournies à un modèle de référence 101. Le modèle de référence est un modèle mathématique qui modélise le comportement du véhicule automobile, et donc la trajectoire à suivre. Dans le cas du contrôle latéral, il fournit une trajectoire de référence, modélisée par une vitesse de lacet de référence $\dot{\psi}_{ref}$. La vitesse de lacet correspond à la vitesse à laquelle le véhicule tourne autour de son centre de gravité. La dérive correspond à l'angle du vecteur vitesse du véhicule par rapport à son axe.

Une unité de calculs et d'allocation de commandes 102 met en œuvre les actionneurs du véhicule de manière à ce que celui-ci suive la trajectoire de référence définie. Il s'agit typiquement d'une boucle fermée pilotée par un contrôleur PID (pour Proportionnel, Intégral, Dérivé) ou équivalent, par exemple un contrôleur $H^\infty$ , configurée pour traduire les consignes de référence en mouvements 103 des actionneurs 104, observer la réponse effective du véhicule et ajuster les consignes des actionneurs de manière à asservir la vitesse de lacet effective $\dot{\psi}$ du véhicule sur la vitesse de lacet de référence $\dot{\psi}_{ref}$.

De manière avantageuse, le modèle de référence 101 peut également fournir une dérive de référence $\beta_{ref}$ du véhicule à l'unité de calculs et d'allocation de commandes 102, que celui-ci peut prendre en compte pour piloter les actionneurs du véhicule. Le calcul de la dérive de référence $\beta_{ref}$ fait partie des calculs requis pour établir la vitesse de lacet de référence $\dot{\psi}_{ref}$ par le modèle de référence 101.

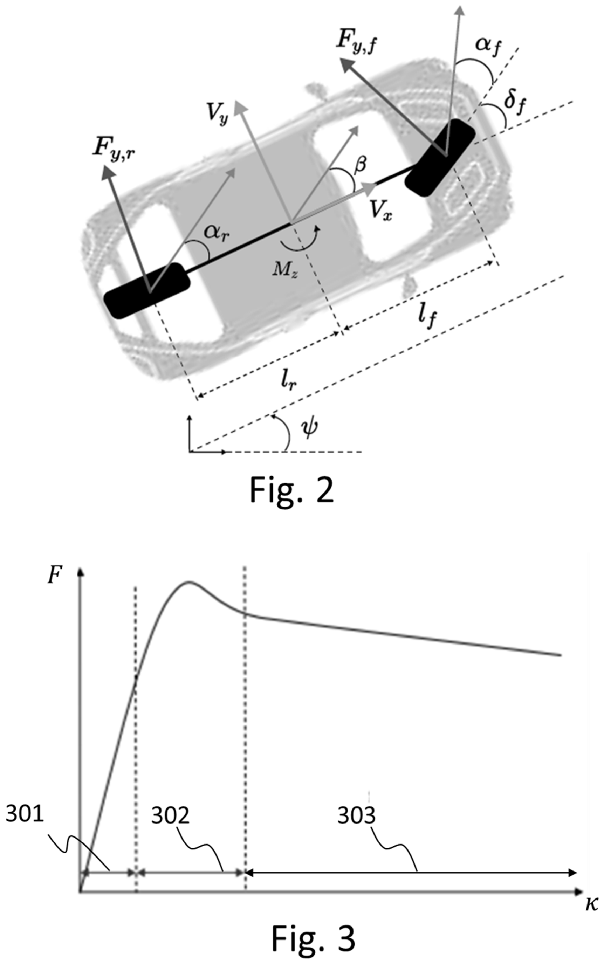

De manière habituelle, le modèle de référence utilisé pour le contrôle latéral d'un véhicule est le modèle bicyclette, dont les paramètres sont représentés à la figure 2. Ce modèle utilise une représentation simplifiée d'un véhicule à quatre roues, dans lequel les roues d'un même train de roues sont modélisées sous la forme d'une roue unique située sur l'axe du centre de gravité du véhicule, d'où son nom. Ce modèle met en œuvre :

-   $i$ un indice permettant de désigner chaque roue du véhicule, avec par exemple $i$ = 1 pour la roue avant gauche, $i$ = 2 pour la roue avant droite, $i$ = 3 pour la roue arrière gauche, et $i$ = 4 pour la roue arrière droite ;
-   $\alpha_f$ et $\alpha_r$ : les angles de dérive des roues respectivement avant et arrière, exprimée en radians. Par la suite, dans l'esprit du modèle bicyclette où les deux roues d'un même train sont représentées par une roue unique, on considèrera que les angles de dérive des roues d'un même train est la même, c'est-à-dire pour le train avant : $\alpha_1 = \alpha_2 = \alpha_f$, et pour le train arrière : $\alpha_3 = \alpha_4 = \alpha_r$ ;
-   $C_{\alpha i}$ : la rigidité de dérive (en anglais « *cornering stiffness* ») du pneu de la roue d'indice $i$, exprimée en N/rad. Par la suite, dans l'esprit du modèle bicyclette où les deux roues d'un même train sont représentées par une roue unique, on considèrera que la rigidité de dérive des pneus d'un même train de roues est la même, c'est-à-dire pour le train avant : $C_{\alpha 1} = C_{\alpha 2} = C_{\alpha f}$, et pour le train arrière : $C_{\alpha 3} = C_{\alpha 4} = C_{\alpha r}$ ;
-   $\delta_f$ : l'angle des roues avant, exprimée en radians ;
-   $F_{yi}$ : la force latérale appliquée à la roue d'indice $i$, exprimée en Newtons ;
-   $v_x$ : le vecteur vitesse longitudinale, exprimée en m/s ;
-   $I_z$ : le moment d'inertie du véhicule, exprimé en kg/m$^2$ ;
-   M : la masse du véhicule, exprimée en kg ;
-   $\beta$ : la dérive du véhicule, qui est aussi l'angle du vecteur vitesse par rapport à l'axe du véhicule, exprimée en radians et dont la dérivée est $\dot{\beta}$, la vitesse de dérive du véhicule, elle aussi exprimée en radians ;

- $\psi$ : l'angle de cap ou de lacet du véhicule, $\dot{\psi}$ la vitesse de lacet (en anglais « *Yaw rate* »), exprimée en rad/s et $\ddot{\psi}$ l'accélération de lacet, exprimée en rad/s$^2$ ;
- $l_f, l_r$ : la distance entre le centre de gravité et l'essieu respectivement avant et arrière du véhicule, exprimée en mètres ;
- $M_Z$ : le moment de lacet, exprimée en Nm/s.

Conformément aux représentations mathématiques habituelles, lorsqu'un symbole est surmonté par un point, il s'agit de la dérivée première de ce symbole, et lorsqu'il est surmonté par deux points, il s'agit de la dérivée seconde de ce symbole. Il est possible d'aller d'une représentation à l'autre en intégrant ou en dérivant.

La représentation matricielle en espace d'état du modèle bicyclette peut être définie comme :

$$
\begin{bmatrix} \dot{\beta} \\ \ddot{\psi} \end{bmatrix} = \begin{bmatrix} -\dfrac{C_{\alpha f} + C_{\alpha r}}{M v_x} & -\dfrac{C_{\alpha f} l_f - C_{\alpha r} l_r}{M v_x^2} - 1 \\ -\dfrac{l_f C_{\alpha f} - l_r C_{\alpha r}}{I_z} & -\dfrac{C_{\alpha f} l_f^2 + C_{\alpha r} l_r^2}{I_z v_x} \end{bmatrix} \begin{bmatrix} \beta \\ \dot{\psi} \end{bmatrix} + \begin{bmatrix} \dfrac{C_{\alpha f}}{M v_x} \\ \dfrac{l_f C_{\alpha f}}{I_z} \end{bmatrix} \delta_f + \begin{bmatrix} 0 \\ \dfrac{1}{I_z} \end{bmatrix} M_z
$$

où :

- les variables d'état sont la dérive $\beta$ du véhicule et la vitesse de lacet $\dot{\psi}$,
- l'entrée de commande est le moment de lacet $M_z$.

Cependant, en l'état, le modèle bicyclette présente deux défauts :

- il suppose que la vitesse longitudinale du véhicule est fixe ou varie très lentement,

- il suppose que le domaine de fonctionnement des pneumatiques reste dans la zone linéaire.

Ces deux hypothèses sont très limitantes. La figure 3 représente le glissement $\kappa$ du contact pneumatique/-chaussée en fonction de la force F, longitudinale ou latérale, exercée sur le pneumatique. Elle permet d'illustrer les différentes zones de fonctionnement d'un pneumatique :

- la zone 301 est la zone de fonctionnement linéaire du pneumatique, où les forces exercées et le glissement du pneu varient linéairement ;

- la zone 302 est la zone de fonctionnement non linéaire du pneumatique. C'est la zone de forte mobilisation de l'adhérence du pneumatique, dans laquelle le véhicule reste néanmoins contrôlable ;

- la zone 303 est la zone d'instabilité du pneumatique, c'est-à-dire la zone de glissement total.

Typiquement, la zone de fonctionnement linéaire 301 du pneu n'est valable que jusqu'à des accélérations transversales d'environ 4m/s$^2$ sur un sol de bonne adhérence. Si l'adhérence est réduite, par exemple à cause de la météo ou du revêtement du sol, la zone linéaire se restreint, ce qui restreint également le domaine de validité du modèle bicyclette.

Un objet de l'invention est donc de proposer un modèle bicyclette dit « évolué », qui soit plus proche du comportement réel du véhicule, c'est-à-dire en particulier qui permette de tenir compte des variations de la vitesse longitudinale du véhicule et des zones de fonctionnement non linéaires des pneumatiques. De cette façon, les consignes de lacet et dérive calculées par le bloc 101 de la figure 1 sont plus représentatives et permettent de solliciter au mieux les actionneurs du véhicule.

**Résumé de l'invention** :

A cet effet, la présente invention décrit un procédé de contrôle d'actionneurs d'un véhicule automobile. Le procédé comprend :

- une première étape de détermination d'une vitesse de lacet de référence $\dot{\psi}_{ref}$ pour le véhicule automobile, en utilisant un modèle de référence prenant comme entrées un angle du volant du véhicule et une consigne de vitesse longitudinale du véhicule,

- une deuxième étape de mise en œuvre des actionneurs du véhicule de manière à asservir la vitesse de lacet effective $\dot{\psi}$ du véhicule sur la vitesse de lacet de référence $\dot{\psi}_{ref}$.

Dans le procédé de contrôle selon l'invention, le modèle de référence utilisé est un modèle bicyclette modifié pour tenir compte :

- de variations de la vitesse longitudinale du véhicule automobile,

- de non linéarités de la zone de fonctionnement des pneumatiques du véhicule automobile.

Plus précisément :

- la détermination de la vitesse de lacet de référence $\dot{\psi}_{ref}$ de la première étape est faite à partir d'un angle du volant $\delta_f$ du véhicule et d'une consigne de vitesse longitudinale $v_x$ du véhicule, et

- la deuxième étape comprend la mise en œuvre des actionneurs du véhicule de manière à asservir la vitesse de lacet effective $\dot{\psi}$ du véhicule sur la vitesse de lacet de référence $\dot{\psi}_{ref}$.

Selon un mode de réalisation particulier du procédé selon l'invention :

- la détermination de la vitesse de lacet de référence $\dot{\psi}_{ref}$ de la première étape comprend en outre la détermination d'une dérive de référence $\beta_{ref}$ ;

- la deuxième étape comprend en outre la mise en œuvre des actionneurs du véhicule de manière à asservir la dérive effective $\beta$ du véhicule sur la dérive de référence $\beta_{ref}$.

Avantageusement, les équations du modèle de référence tiennent compte de la dérive spécifique arrière $d_{2s}$, du gradient de sous-virage $\nabla_{sv}$ et de l'accélération longitudinale $a_x$ du véhicule.

Selon un mode de réalisation de l'invention, le calcul de l'accélération de lacet $\ddot{\psi}$ et de la vitesse de dérive $\dot{\beta}$ valent :

$$\ddot{\psi} = \frac{l_f F_F C_{\alpha f} \delta_f}{I_z} + \frac{\beta}{I_z}\left((F_R - F_F)C_{\alpha_f}l_f + \frac{F_R l_f C_{\alpha_f} \nabla_{sv}}{d_{2s}}\right) - \dot{\psi}\frac{C_{\alpha_f}l_f}{I_z v_x}\left(F_F l_f + F_R l_r\left(1 + \frac{\nabla_{sv}}{d_{2s}}\right)\right)$$

$$\dot{\beta} = \frac{F_F C_{\alpha_f}}{M v_x}\delta_f - \beta\left(\frac{F_F C_{\alpha_f}}{M v_x} + \frac{F_R l_f}{v_x d_{2s} L} + \frac{a_x}{v_x}\right) + \dot{\psi}\left(\frac{l_f C_{\alpha_f}}{M v_x^2}\left(F_R - F_F + \frac{F_R \nabla_{sv}}{d_{2s}}\right) - 1\right)$$

avec :

- $C_{\alpha f}$ : la rigidité de dérive des roues avant,
- $C_{\alpha r}$ : la rigidité de dérive des roues arrière,
- $\delta_f$ : l'angle des roues avant,
- $v_x$ : le vecteur vitesse longitudinale,
- $I_z$ : le moment d'inertie du véhicule,
- M : la masse du véhicule,
- $l_f$, $l_r$ : la distance entre le centre de gravité et l'essieu, respectivement avant et arrière, du véhicule,
- L : l'empattement du véhicule,
- $d_{2s}$ : la dérive spécifique arrière du véhicule,
- $\nabla_{sv}$ : le gradient de sous-virage du véhicule,
- $a_x$ : l'accélération longitudinale du véhicule,

et :

$$F_F = \left(\frac{f(\lambda_1)}{1 + \sigma_{x_1}} + \frac{f(\lambda_2)}{1 + \sigma_{x_2}}\right)$$

$$F_R = \left( \frac{f(\lambda_3)}{1 + \sigma_{x_3}} + \frac{f(\lambda_4)}{1 + \sigma_{x_4}} \right)$$

avec :

- $i$ : un indice permettant de désigner chaque roue du véhicule, avec $i \in [1; 4]$ ;
- $f(\lambda_i)$ : une fonction donnée par le modèle de Dugoff pour la roue d'indice $i$,
- $\sigma_{x_i}$ : une dérive longitudinale pour la roue d'indice $i$.

Avantageusement, au moins un des actionneurs du véhicule est un actionneur agissant sur la dynamique latérale du véhicule, tel qu'un actionneur de freinage ou un actionneur de braquage de roues directrices du véhicule.

Selon un mode de réalisation particulier de l'invention, au moins un paramètre du véhicule utilisé pour calculer le modèle de référence est défini par les caractéristiques du véhicule, puis adapté de manière à modifier le comportement du véhicule. Avantageusement, un ou plusieurs de ces paramètres sont choisis parmi un empattement $L$ du véhicule, un gradient de sous-virage $\nabla_{sv}$ du véhicule et une dérive spécifique arrière $d_{2s}$ du véhicule.

Selon un mode de réalisation particulier de l'invention, la deuxième étape de mise en œuvre des actionneurs du véhicule prend comme entrée une estimation d'un coefficient $\mu$ de friction de la surface de la route.

L'invention porte également sur un véhicule automobile comprenant des moyens de calcul et des actionneurs, les moyens de calculs étant configurés pour déterminer des consignes transmises aux actionneurs qui les mettent en œuvre. Dans ce véhicule, les moyens de calculs sont configurés pour mettre en œuvre un procédé de contrôle d'actionneurs d'un véhicule selon l'invention.

**Brève description des figures :**

L'invention sera mieux comprise et d'autres caractéristiques, détails et avantages apparaîtront mieux à la lecture de la description qui suit, donnée à titre non limitatif, et grâce aux figures annexées, données à titre d'exemple, parmi lesquelles :

- la figure 1 représente schématiquement les étapes requises pour le contrôle latéral d'un véhicule automobile ;

- la figure 2 représente les paramètres utilisés pour le modèle bicyclette pour caractériser la dynamique latérale d'un véhicule automobile ;

- la figure 3 représente le coefficient de glissement $\kappa$ du contact pneumatique/chaussée en fonction de la force $F$, longitudinale ou latérale, exercée sur un pneumatique ;

- la figure 4 représente schématiquement les étapes d'un procédé de contrôle d'actionneurs d'un véhicule automobile selon l'invention ;

- la figure 5 illustre les performances du procédé de contrôle d'actionneurs d'un véhicule automobile selon l'invention ;

- la figure 6 illustre les performances du procédé de contrôle d'actionneurs d'un véhicule automobile selon l'invention, prenant en outre le coefficient de friction de la route en compte.

Des références identiques peuvent être utilisées dans des figures différentes lorsqu'elles désignent des éléments identiques ou comparables.

**Description détaillée :**

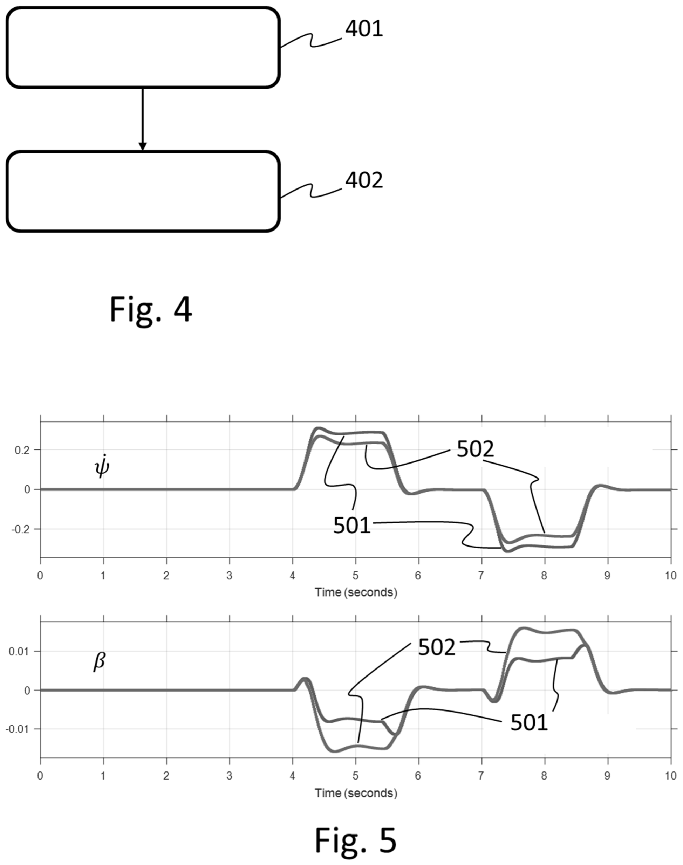

La présente invention porte sur un procédé de contrôle d'actionneurs d'un véhicule automobile. La figure 4 représente schématiquement les étapes du procédé selon l'invention, à savoir :

- une première étape 401 de détermination d'une trajectoire de référence du véhicule en utilisant un modèle de référence, et

- une deuxième étape 402 de mise en œuvre des actionneurs du véhicule, de manière à suivre la trajectoire de référence définie lors de l'étape 401.

Ces premières et deuxièmes étapes sont conformes à l'état de l'art. Comme décrit à la figure 1, un mode de réalisation connu consiste à déterminer, lors de l'étape 401, une vitesse de lacet de référence $\dot{\psi}_{ref}$ du véhicule automobile à partir du modèle de référence, à partir d'un angle du volant et d'une consigne de vitesse longitudinale, et d'asservir la vitesse de lacet effective $\dot{\psi}$ du véhicule sur la vitesse de lacet de référence $\dot{\psi}_{ref}$ lors de l'étape 402 dans une boucle fermée. L'étape 402 correspond aux traitements mis en œuvre par les blocs 102, 103 et 104 de la figure 1.

De manière avantageuse, l'étape 401 peut également comprendre la détermination d'une dérive de référence $\beta_{ref}$, qui peut également être utilisée pour déterminer les consignes des actionneurs.

L'invention se démarque de l'état de la technique en ce que le modèle de référence utilisé est un modèle bicyclette modifié pour tenir compte :

- de variations de la vitesse longitudinale du véhicule automobile,

- de non linéarités de la zone de fonctionnement des pneumatiques du véhicule automobile.

Par la suite, on utilisera également les notations suivantes :

- $v_y$ : le vecteur vitesse latérale, exprimée en m/s ;

- $k_v$ : le taux de sous-virage ;

- $L$ : l'empattement du véhicule, en mètres ;

- $a_x$ et $a_y$ : l'accélération du véhicule, respectivement longitudinale et latérale, exprimée en m/s$^2$ ;

- $\mu$ : le coefficient de friction de la surface de la route ;

- $r_{\text{eff}}$ : le rayon effectif des pneumatiques, exprimé en mètres ;

- $\omega_i$ : la vitesse de rotation de la roue d'indice $i$, exprimée en radisec ;

- $F_{x_i}$ : la force longitudinale appliquée à la roue d'indice $i$, exprimée en Newtons ;

- $\sigma_{x_i}$ : la dérive longitudinale pour la roue d'indice $i$ ;

- $C_{\sigma i}$ : la rigidité longitudinale (en anglais « *longitudinal stiffness* ») du pneu de la roue d'indice $i$, exprimée en N/rad ;

- $\alpha_i$ : l'angle de dérive latérale (en anglais « slide slip angle ») pour la roue d'indice $i$, exprimé en radians.

Le modèle bicyclette fait l'hypothèse que l'accélération longitudinale $a_x$ du véhicule est nulle ($a_x = 0$). L'invention propose de modifier le modèle bicyclette classique pour lever cette hypothèse et prendre en compte le fait que la vitesse du véhicule n'est pas constante.

Pour cela, on exprime l'angle de dérive $\beta$ du véhicule à son centre de gravité par l'équation :

$$\beta = \frac{v_y}{v_x} \qquad\qquad (1)$$

On peut calculer sa dérivée $\dot{\beta}$, en considérant que $v_x$ n'est pas constante, et que par conséquent $\dot{v}_x \neq 0$ :

$$\dot{\beta} = \frac{\dot{v}_y}{v_x} - \beta \frac{\dot{v}_x}{v_x} \qquad\qquad (2)$$

On obtient ainsi la dérivée $\dot{v}_y$ de la vitesse latérale :

$$\dot{v}_y = v_x \left( \dot{\beta} + \beta \frac{a_x}{v_x} \right) \qquad\qquad (3)$$

Le modèle bicyclette « standard » considère que les forces latérales qui s'appliquent au véhicule sont proportionnelles aux angles de dérives latérales des roues. Cependant, comme indiqué en introduction, cette hypothèse n'est valable que jusqu'à des accélérations latérales transversales d'environ 4 m/s² sur un support de haute adhérence, et beaucoup moins dès que l'adhérence faiblit.

Afin de tenir compte de ce que les pneumatiques du véhicule ne sont pas systématiquement dans une zone de fonctionnement linéaire, l'invention propose d'utiliser le modèle de Dugoff, bien connu de l'homme du métier, pour simuler la dynamique des pneumatiques. D'autres modèles de modélisation du fonctionnement des pneumatiques d'un véhicule peuvent être utilisés, par exemple le modèle de Pacejka. Cependant, le modèle de Dugoff présente l'avantage de ne pas requérir de paramètres supplémentaires par rapport au modèle bicyclette.

Selon le modèle de Dugoff, la force longitudinale $F_{x_i}$ qui s'applique au contact pneu-sol est donnée par :

$$F_{x_i} = C_{\sigma_i} \frac{\sigma_{x_i}}{1 + \sigma_{x_i}} f(\lambda_i) \tag{4}$$

avec $\sigma_{x_i}$ le glissement longitudinal à chaque roue, défini par :

$$\sigma_{x_i} = \frac{r_{\text{eff}} \, w_i - v_x}{\max(v_x, r_{\text{eff}} \, w_i)} \tag{5}$$

Toujours selon le modèle de Dugoff, la force latérale $F_{y_i}$ qui s'exerce au contact pneu-sol est donnée par :

$$F_{y_i} = C_{\alpha_i} \frac{\tan(\alpha_i)}{1 + \sigma_{x_i}} f(\lambda_i) \tag{6}$$

où la variable $f(\lambda_i)$ est calculée de la façon suivante :

$$f(\lambda_i) = (2 - \lambda_i)\lambda_i \;\; si \; \lambda_i < 1$$
$$f(\lambda_i) = 1 \;\; sinon \tag{7}$$

avec :

$$\lambda_i = \frac{\mu_i \, F_{z_i}(1 + \sigma_{x_i})}{2\sqrt{(C_{\sigma_i}\sigma_{x_i})^2 + (C_{\alpha_i}\tan(\alpha_i))^2}} \tag{8}$$

avec :

- $\mu_i$ l'adhérence pour la roue d'indice i, qui est généralement approximée par $\mu$,
- $F_{z_i}$ la force selon l'axe vertical s'appliquant à la roue d'indice *i*, qui peut être obtenue par exemple par des capteurs de course des amortisseurs du véhicule, ou calculée à partir d'informations liées aux accélérations latérales et longitudinales du véhicule.

On applique le principe fondamental de la dynamique en rotation autour de l'axe vertical, qui nous permet d'exprimer l'évolution de la vitesse de lacet par :

$$I_z\ddot{\psi} = (F_{y_1} + F_{y_2})l_f - (F_{y_3} + F_{y_4})l_r \tag{9}$$

Pour tenir compte des zones de linéarité des pneumatiques, on utilise l'équation (6) pour exprimer les forces dans l'équation (9) comme suit :

$$I_z\ddot{\psi} = \left(\frac{C_{\alpha_1} \, \alpha_1 \, f(\lambda_1)}{1 + \sigma_{x_1}} + \frac{C_{\alpha_2} \, \alpha_2 \, f(\lambda_2)}{1 + \sigma_{x_2}}\right) l_f - \left(\frac{C_{\alpha_3} \, \alpha_3 \, f(\lambda_3)}{1 + \sigma_{x_3}} + \frac{C_{\alpha_4} \, \alpha_4 \, f(\lambda_4)}{1 + \sigma_{x_4}}\right) l_r \tag{10}$$

Il s'agit maintenant d'utiliser les équations (3) et (10) dans les calculs du modèle de référence « évolué » objet de l'invention.

Afin d'alléger les notations, on utilise par la suite :

$$F_F = \left( \frac{f(\lambda_1)}{1 + \sigma_{x_1}} + \frac{f(\lambda_2)}{1 + \sigma_{x_2}} \right)$$

$$F_R = \left( \frac{f(\lambda_3)}{1 + \sigma_{x_3}} + \frac{f(\lambda_4)}{1 + \sigma_{x_4}} \right)$$

Cela permet de réécrire l'équation (10) sous la forme :

$$I_z \ddot{\psi} = F_F C_{\alpha_f} \, \alpha_f \, l_f - F_R C_{\alpha_r} \, \alpha_r \, l_r \qquad\qquad (11)$$

Le gradient de sous-virage $\nabla_{sv}$ (en anglais « *understeer gradient* »), qui permet de caractériser le comportement sous-vireur, sur-vireur ou neutre d'un véhicule, est défini de la façon suivante :

$$\nabla_{sv} = \frac{M}{L} \left( \frac{l_r}{C_{\alpha_f}} - \frac{l_f}{C_{\alpha_f}} \right)$$

soit

$$\nabla_{sv} = \frac{M}{L} \frac{\left( l_r C_{\alpha_r} - l_f C_{\alpha_f} \right)}{C_{\alpha_f} C_{\alpha_r}}$$

On a donc :

$$\frac{L C_{\alpha_f} C_{\alpha_r} \nabla_{sv}}{M} = l_r C_{\alpha_r} - l_f C_{\alpha_f}$$

La dérive spécifique arrière $d_{2s}$ d'un véhicule (en anglais « *specific rear slip* ») est définie par :

$$d_{2s} = \frac{M}{C_{\alpha_r}} \frac{l_f}{L}$$

Cela permet d'écrire :

$$\frac{C_{\alpha_r}}{M} = \frac{1}{d_{2s}} \frac{l_f}{L}$$

On a alors :

$$C_{\alpha_r} l_r - C_{\alpha_f} l_f = \frac{l_f C_{\alpha_f} \nabla_{sv}}{d_{2s}}$$

qui peut être réécrit sous la forme:

$$C_{\alpha_r} l_r = C_{\alpha_f} l_f + \frac{l_f C_{\alpha_f} \nabla_{sv}}{d_{2s}} \qquad (12)$$

La dérive latérale $\alpha_f$ de la roue avant peut être exprimée par :

$$\alpha_{\mathrm{f}} = \delta_f - \beta - \frac{l_f \dot{\Psi}}{v_x} \qquad (13)$$

La dérive latérale $\alpha_r$ de la roue arrière peut être exprimée par :

$$\alpha_r = -\beta + \frac{l_r \dot{\Psi}}{v_x} \qquad (14)$$

En utilisant (13) et (14), on peut réécrire l'équation (11) sous la forme :

$$I_z \ddot{\psi} = F_F C_{\alpha_f} l_f \left( \delta_f - \beta - \frac{l_f \dot{\Psi}}{v_x} \right) - F_R C_{\alpha_r} l_r \left( -\beta + \frac{l_r \dot{\Psi}}{v_x} \right)$$

soit :

$$\ddot{\psi} = F_F C_{\alpha_f} l_f \delta_f + \beta \left( -F_F C_{\alpha_f} l_f + F_R C_{\alpha_r} l_r \right) + \dot{\psi} \left( -\frac{F_F C_{\alpha_f} l_f^2 + F_R C_{\alpha_r} l_r^2}{v_x} \right)$$

En prenant en compte l'équation (13), on obtient :

$$I_z \ddot{\psi} = F_F C_{\alpha_f} l_f \delta_f + \beta \left( -F_F C_{\alpha_f} l_f + F_R \left\{ C_{\alpha_f} l_f + \frac{l_f C_{\alpha_f} \nabla_{sv}}{d_{2s}} \right\} \right)$$

$$+ \dot{\psi} \left( -\frac{F_F C_{\alpha_f} l_f^2 + F_R l_r \left\{ C_{\alpha_f} l_f + \frac{l_f C_{\alpha_f} \nabla_{sv}}{d_{2s}} \right\}}{v_x} \right) \qquad (15)$$

En introduisant dans l'équation précédente l'expression (13) de la dérive spécifique arrière du véhicule et du gradient de sous virage, on obtient :

$$\ddot{\psi} = \frac{l_f F_F C_{\alpha f} \delta_f}{I_z} + \frac{\beta}{I_z} \left( (F_R - F_F) C_{\alpha_f} l_f + \frac{F_R l_f C_{\alpha_f} \nabla_{sv}}{d_{2s}} \right)$$

$$- \dot{\psi} \frac{C_{\alpha_f} l_f}{I_z v_x} \left( F_F l_f + F_R l_r \left( 1 + \frac{\nabla_{sv}}{d_{2s}} \right) \right) \qquad (16)$$

De manière équivalente, on peut calculer le comportement de la dérive $\beta$ en prenant en compte le fait que l'accélération longitudinale $a_x$ n'est pas nulle, et que la zone de fonctionnement des pneumatiques n'est pas nécessairement la zone linéaire, via l'équation du principe fondamental de la dynamique :

$$M(\dot{v}_y + \dot{\psi} v_x) = \left( F_{y_1} + F_{y_2} \right) + \left( F_{y_3} + F_{y_4} \right)$$

En utilisant l'équation (3), on obtient :

$$M \left( v_x \left( \dot{\beta} + \beta \frac{a_x}{v_x} \right) + \dot{\psi} v_x \right) = (F_{y_1} + F_{y_2}) + (F_{y_3} + F_{y_4})$$

En introduisant l'équation (12) d'expression de la dérive spécifique arrière du véhicule et du gradient de sous-virage de manière comparable à ce qui a été fait pour l'équation (16), on obtient alors :

$$\dot{\beta} = \frac{F_F C_{\alpha_f}}{M v_x} \delta_f - \beta \left( \frac{F_F C_{\alpha_f}}{M v_x} + \frac{F_R l_f}{v_x d_{2s} L} + \frac{a_x}{v_x} \right) \\ + \dot{\psi} \left( \frac{l_f C_{\alpha_f}}{M v_x^2} \left( F_R - F_F + \frac{F_R \nabla_{sv}}{d_{2s}} \right) - 1 \right) \qquad (17)$$

Les équations (16) et (17) correspondent donc à la représentation en espace d'état du modèle bicyclette « évolué » tel que défini par un mode de réalisation de l'invention. Il tient compte de ce que l'accélération longitudinale du véhicule peut être non nulle, et de ce que les pneus peuvent ne pas être dans leur zone de fonctionnement linéaire. Cette représentation permet de calculer les consignes de référence utilisées par l'unité de calculs et d'allocation de commandes 102 pour mettre en œuvre les actionneurs du véhicule, à savoir la vitesse de lacet de référence $\dot{\psi}_{ref}$ et éventuellement la dérive $\beta_{ref}$, par intégration de $\ddot{\psi}_{ref}$ et $\dot{\beta}_{ref}$.

On remarquera en particulier que, contrairement au modèle bicyclette « classique », le modèle bicyclette « évolué » proposé par l'invention tient compte de la dérive spécifique arrière $d_{2s}$ du véhicule, du gradient de sous-virage $\nabla_{sv}$ du véhicule et de son accélération longitudinale $a_x$.

De manière avantageuse, le modèle de référence de type bicyclette « évolué » selon l'invention peut être utilisé pour modifier le comportement du véhicule, en définissant une trajectoire de référence qui serait celle d'un véhicule ayant un gabarit différent du véhicule concerné. Par exemple, il est possible de modifier, de manière logicielle dans le modèle de référence, l'empattement $L$ du véhicule, son gradient de sous-virage $\nabla_{sv}$ et/ou sa dérive spécifique arrière $d_{2s}$, de manière à ce que son comportement soit similaire à celui d'un véhicule qui, par exemple, aurait un empattement plus court (pour apporter de l'agilité en ville par exemple) ou plus élevé (pour améliorer la perception de stabilité sur des manœuvres de type changement de file) ou un comportement survireur/sous-vireur différent.

Cette adaptation du comportement du véhicule peut être mise en œuvre au travers de tables de mises au point. A titre d'illustration, on décrit ensuite l'utilisation de trois tables de mises au point, permettant de faire varier à la fois l'empattement $L$ du véhicule, le gradient de sous-virage $\nabla_{sv}$ et la dérive spécifique arrière $d_{2s}$, mais l'invention s'applique de manière identique en ne faisant varier qu'un seul ou deux de ces paramètres.

Une première table permet d'obtenir un coefficient $R_1$ qui s'applique sur le gradient de sous-virage $\nabla_{sv}$ du véhicule afin que celui-ci se comporte comme si son gradient de sous-virage était $\nabla_{sv,des} = R_1 . V_{sv}$. Ce coefficient peut dépendre, entre autres, de la vitesse véhicule, du couple moteur demandé ou encore du typage (confort, sport...) choisi par le client pour son véhicule.

Une deuxième table permet d'obtenir un coefficient $R_2$ qui s'applique sur l'empattement $L$ du véhicule, pour simuler un véhicule plus court ou plus long par exemple. Ce coefficient peut dépendre, entres autres, de l'accélération latérale $a_y$ du véhicule et de sa vitesse longitudinale $v_x$. L'utilisation d'un coefficient $R_2$ inférieur à 1 permet de simuler un empattement plus court que l'empattement effectif du véhicule, ce qui lui apporte de l'agilité. La sensation de direction du véhicule est alors plus « directe », c'est-à-dire que pour un même virage, l'angle volant nécessaire est diminué. Au contraire, si $R_2$ est supérieur à 1, la direction a un comportement moins « direct » : le véhicule se comporte comme s'il était plus long, et il faut plus d'angle au volant pour un même virage.

On a alors :

$$l_{f,des} = R_2 l_f$$

$$l_{r,des} = R_2 l_r$$

avec $l_{f,des}$ et $l_{r,des}$ la distance entre le centre de gravité et l'essieu respectivement avant et arrière du véhicule, simulées par ce mode de réalisation de l'invention.

Une troisième table permet d'obtenir un coefficient $R_3$ qui s'applique sur la dérive arrière du véhicule : $d_{2s,des} = R_3 . d_{2s}$. La dérive arrière du véhicule permet de régler le phasage entre le train avant et le train arrière. Avancer ou retarder la consigne permet d'obtenir un train arrière totalement transparent, c'est à dire un train arrière qui tourne sans que cela ne soit perceptible par les passagers.

En utilisant $\nabla_{sv,des}$ au lieu de $V_{sv}$, $l_{f,des}$ et $l_{r,des}$ au lieu de $l_f$ et $l_r$, et/ou $d_{2s,des}$ au lieu de $d_{2s}$ dans les équations (16) et (17), il est possible de modifier le comportement dynamique du véhicule et d'obtenir les valeurs de comportement de référence correspondantes $\ddot{\psi}$ et $\dot{\beta}$. Les valeurs de consigne de vitesse de lacet $\dot{\psi}$ et de dérive $\beta$ peuvent ensuite être obtenues par intgration de $\ddot{\psi}$ et $\dot{\beta}$, afin d'être transmises à l'unité de calculs et d'allocation de commandes 102.

La figure 5 représente des résultats obtenus au cours d'expérimentation. Les courbes 501 représentent les consignes de vitesse de lacet $\dot{\psi}$ et de dérive $\beta$ obtenues en utilisant le modèle bicyclette standard. Les courbes 502 représentent les mêmes consignes, cette fois-ci en utilisant le modèle bicyclette selon l'invention, qui tient compte de ce que les pneumatiques peuvent être hors de leur zone de fonctionnement linéaire. Les mesures sont faites sur un scénario comprenant une prise de virage à 0.7m/s$^2$ d'accélération transversale, ce qui est au delà de la zone de fonctionnement linéaire des pneumatiques.

On constate que la consigne obtenue par le modèle bicyclette selon l'invention est adaptée à la zone de fonctionnement non linéaire (entre 4.5 et 5.5 secondes, et entre 7.5 et 8.5 secondes), puisque la consigne de lacet utilisée comme référence est réduite par rapport à la consigne délivrée d'un modèle bicyclette « standard ». Ainsi, l'unité d'allocation de commandes n'essaiera pas de faire suivre à la voiture une consigne plus élevée que ce que la physique des pneumatiques autorise. En résulte une conduite du véhicule plus souple et plus confortable, sans les accélérations et freinages par à-coups qui auraient eu lieu en utilisant le modèle bicyclette « standard » pour essayer d'atteindre une consigne qui est au-delà des limites physiques de la voiture. Le véhicule tient alors particulièrement bien la route, tout en consommant moins.

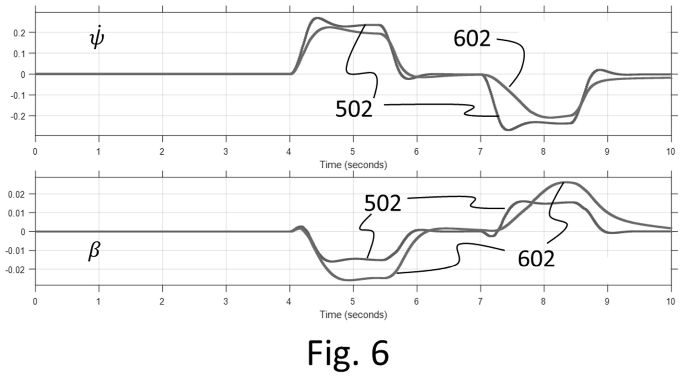

La figure 6 représente la courbe 502 de la figure 5, et une nouvelle courbe 602 construite en utilisant une estimation du coefficient $\mu$ d'adhérence de la route comme entrée de l'unité de calculs et d'allocation de commandes 102. Dans cet exemple, $\mu = 0.4$, ce qui correspond à un scénario de route glissante/enneigée. On observe que l'utilisation du modèle bicyclette selon l'invention, qui prend en compte le coefficient $\mu$ d'adhérence de la route dans les équations modélisant le comportement des pneumatiques permet en outre d'adapter la consigne de vitesse de lacet $\dot{\psi}$ à l'adhérence de la chaussée. Ainsi, sur une chaussée glissante, l'unité de calculs et d'allocation de commandes 102 fait adopter à la voiture un comportement ayant une dynamique latérale plus faible, donc plus adaptée à la circulation sur une route glissante/enneigée.

L'invention porte sur un procédé de contrôle d'actionneurs d'un véhicule automobile tel que défini ci-dessus, mais également sur un véhicule automobile comprenant des moyens de calculs (par exemple un calculateur, un microprocesseur ou tout autre dispositif électronique permettant de réaliser des calculs) et des actionneurs, par exemple des actionneurs de direction des trains de roues directifs et de freinage. Les moyens de calculs sont configurés pour mettre en œuvre le procédé de contrôle d'actionneurs selon l'invention afin de déterminer une consigne de référence selon un modèle bicyclette « évolué » pour piloter les actionneurs du véhicule afin de suivre la trajectoire définie par la consigne de référence.

**Revendications**

1. Procédé de contrôle d'actionneurs d'un véhicule automobile comprenant :

   - une première étape (401) de détermination d'une vitesse de lacet de référence $\dot{\psi}_{ref}$ pour le véhicule automobile, en utilisant un modèle de référence prenant comme entrées un angle $\delta_f$ du volant du véhicule et une consigne de vitesse longitudinale $v_x$ du véhicule,
   - une deuxième étape (402) de mise en œuvre des actionneurs du véhicule de manière à asservir la vitesse de lacet effective $\dot{\psi}$ du véhicule sur la vitesse de lacet de référence $\dot{\psi}_{ref}$,

   le procédé étant **caractérisé en ce que** le modèle de référence utilisé est un modèle bicyclette modifié pour tenir compte :

   - de variations de la vitesse longitudinale $v_x$ du véhicule automobile,
   - de non linéarités de la zone de fonctionnement des pneumatiques du véhicule automobile.

2. Procédé de contrôle des actionneurs d'un véhicule selon la revendication précédente, dans lequel :

   - la détermination de la vitesse de lacet de référence $\dot{\psi}_{ref}$ de la première étape (401) comprend en outre la détermination d'une dérive de référence $\beta_{ref}$ ;
   - la deuxième étape (402) comprend en outre la mise en œuvre des actionneurs du véhicule de manière à asservir

la dérive effective $\beta$ du véhicule sur la dérive de référence $\beta_{ref}$.

**3.** Procédé de contrôle des actionneurs d'un véhicule selon l'une des revendications précédentes, dans lequel les équations du modèle de référence tiennent compte d'une dérive spécifique arrière $d_{2s}$, d'un gradient de sous-virage $\nabla_{sv}$ et d'une accélération longitudinale $a_x$ du véhicule.

**4.** Procédé de contrôle des actionneurs d'un véhicule selon l'une des revendications précédentes, dans lequel l'expression du calcul de l'accélération de lacet $\ddot{\psi}$ et de la vitesse de dérive $\dot{\beta}$ du véhicule valent :

$$\ddot{\psi} = \frac{l_f F_F C_{\alpha f} \delta_f}{I_z} + \frac{\beta}{I_z}\left((F_R - F_F)C_{\alpha_f}l_f + \frac{F_R l_f C_{\alpha_f} \nabla_{sv}}{d_{2s}}\right) - \dot{\psi}\frac{C_{\alpha_f}l_f}{I_z v_x}\left(F_F l_f + F_R l_r\left(1 + \frac{\nabla_{sv}}{d_{2s}}\right)\right)$$

$$\dot{\beta} = \frac{F_F C_{\alpha_f}}{M v_x}\delta_f - \beta\left(\frac{F_F C_{\alpha_f}}{M v_x} + \frac{F_R l_f}{v_x d_{2s} L} + \frac{a_x}{v_x}\right) + \dot{\psi}\left(\frac{l_f C_{\alpha_f}}{M v_x^2}\left(F_R - F_F + \frac{F_R \nabla_{sv}}{d_{2s}}\right) - 1\right)$$

avec :

- $C_{\alpha f}$ : la rigidité de dérive des roues avant,
- $C_{\alpha r}$ : la rigidité de dérive des roues arrière,
- $\delta_f$ : l'angle des roues avant,
- $v_x$ : le vecteur vitesse longitudinale,
- $I_z$ : le moment d'inertie du véhicule,
- $M$ : la masse du véhicule,
- $l_f$, $l_r$ : la distance entre le centre de gravité et l'essieu, respectivement avant et arrière, du véhicule,
- $L$ : l'empattement du véhicule,
- $d_{2s}$ : la dérive spécifique arrière du véhicule,
- $\nabla_{sv}$ : le gradient de sous-virage du véhicule,
- $a_x$ : l'accélération longitudinale du véhicule,

et

$$F_F = \left(\frac{f(\lambda_1)}{1 + \sigma_{x_1}} + \frac{f(\lambda_2)}{1 + \sigma_{x_2}}\right)$$

$$F_R = \left(\frac{f(\lambda_3)}{1 + \sigma_{x_3}} + \frac{f(\lambda_4)}{1 + \sigma_{x_4}}\right)$$

avec :

- $i$ : un indice permettant de désigner chaque roue du véhicule, avec $i \in [1; 4]$ ;
- $f(\lambda_i)$ : une fonction donnée par le modèle de Dugoff pour la roue d'indice $i$,
- $\sigma_{x_i}$ : une dérive longitudinale pour la roue d'indice $i$.

**5.** Procédé de contrôle d'actionneurs d'un véhicule selon l'une des revendications précédentes, dans lequel au moins un des actionneurs du véhicule est un actionneur agissant sur la dynamique latérale du véhicule, tel qu'un actionneur de freinage ou un actionneur de braquage de roues directrices du véhicule.

**6.** Procédé de contrôle d'actionneurs d'un véhicule selon l'une des revendications précédentes, dans lequel au moins un paramètre du véhicule utilisé pour calculer le modèle de référence est défini par les caractéristiques du véhicule, puis adapté de manière à modifier le comportement du véhicule.

**7.** Procédé de contrôle d'actionneurs d'un véhicule selon la revendication 6, dans lequel ledit au moins un paramètre du véhicule adapté de manière à modifier le comportement du véhicule comprend un ou plusieurs paramètres parmi un empattement $L$ du véhicule, un gradient de sous-virage $\nabla_{sv}$ du véhicule et une dérive spécifique arrière $d_{2s}$ du véhicule.

8. Procédé de contrôle d'actionneurs d'un véhicule selon l'une des revendications précédentes, dans lequel la deuxième étape (402) de mise en œuvre des actionneurs du véhicule prend comme entrée une estimation d'un coefficient $\mu$ de friction de la surface de la route.

9. Véhicule automobile comprenant des moyens de calcul et des actionneurs, lesdits moyens de calculs étant configurés pour déterminer des consignes transmises aux actionneurs qui les mettent en œuvre, **caractérisé en ce que** les moyens de calculs sont configurés pour mettre en œuvre un procédé de contrôle d'actionneurs d'un véhicule selon l'une des revendications 1 à 8.

Fig. 1

Fig. 2

Fig. 3

Fig. 4

Fig. 5

Fig. 6

Europäisches Patentamt
European Patent Office
Office européen des brevets

# RAPPORT DE RECHERCHE EUROPEENNE

Numéro de la demande

**EP 25 22 3785**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2020/172118 A1 (PETERS YANNIK [DE]) 4 juin 2020 (2020-06-04) | 1,2,5,6, 8,9 | INV. B60W30/045 |
| A | * alinéas [0251] - [0252] * ----- | 3,4,7 | B60W50/00 |
| Y | LI JUN-TING ET AL: "On the Optimal Path Following for an Autonomous Vehicle via Nonlinear Model Predictive Control", 2023 9TH INTERNATIONAL CONFERENCE ON CONTROL, AUTOMATION AND ROBOTICS (ICCAR), IEEE, 21 avril 2023 (2023-04-21), pages 250-255, XP034362709, DOI: 10.1109/ICCAR57134.2023.10151708 | 1,2,5,6, 8,9 | |
| A | * pages 67-103; figure 16 * ----- | 3,4,7 | |
| A | RUSSELL HOLLY E B ET AL: "Low friction emulation of lateral vehicle dynamics using four-wheel steer-by-wire", 2015 AMERICAN CONTROL CONFERENCE (ACC), IEEE, 4 juin 2014 (2014-06-04), pages 3924-3929, XP032621707, ISSN: 0743-1619, DOI: 10.1109/ACC.2014.6859409 [extrait le 2014-07-17] * le document en entier * ----- | 1-9 | |

| | | | DOMAINES TECHNIQUES RECHERCHES (IPC) |
|---|---|---|---|
| | | | B60W |

Le présent rapport a été établi pour toutes les revendications

| Lieu de la recherche | Date d'achèvement de la recherche | Examinateur |
|---|---|---|
| Munich | 17 décembre 2025 | Stolle, Martin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 22 3785

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-12-2025

| Document brevet cité au rapport de recherche | Date de publication | Membre(s) de la famille de brevet(s) | Date de publication |
|---|---|---|---|
| US 2020172118 A1 | 04-06-2020 | DE 102019129709 A1<br>US 2020172118 A1 | 04-06-2020<br>04-06-2020 |

EPO FORM P0460

Pour tout renseignement concernant cette annexe : voir Journal Officiel de l'Office européen des brevets, No.12/82